(19) Europäisches Patentamt

European Patent Office

Office européen des brevets

(11) EP 0 996 090 A2

(12) EUROPÄISCHE PATENTANMELDUNG

(43) Veröffentlichungstag:
26.04.2000 Patentblatt 2000/17

(51) Int. Cl.⁷: G06T 5/20

(21) Anmeldenummer: 99203395.1

(22) Anmeldetag: 15.10.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 24.10.1998 DE 19849090

(71) Anmelder:
• Philips Corporate Intellectual Property GmbH
52064 Aachen (DE)
Benannte Vertragsstaaten:
DE
• Koninklijke Philips Electronics N.V.
5621 BA Eindhoven (NL)
Benannte Vertragsstaaten:
FR GB NL

(72) Erfinder:
• Aach, Til, Prof. Dr.
52064 Aachen (DE)
• Buzug, Thorsten, Dr.,
52064 Aachen (DE)
• Stahl, Martin, Dipl.-Ing.
52064 Aachen (DE)
• Springub, Ansgar
52064 Aachen (DE)
• Pralow, Thomas
52064 Aachen (DE)
• Maack, Ingo
52064 Aachen (DE)

(74) Vertreter: Peters, Carl Heinrich
Philips Corporate Intellectual Property GmbH,
Habsburgerallee 11
52064 Aachen (DE)

(54) **Verfahren zur Verarbeitung eines Eingangsbildes**

(57) Die Erfindung bezieht sich auf ein Bildverarbeitungsverfahren bei dem ein Eingangsbild zunächst in eine Reihe von Detailbildern zerlegt wird, denen jeweils ein Ortsfrequenzbereich zugeordnet ist, wobei Schwachkontraste angehoben werden, bevor ein Ausgangsbild aus den bei der Zerlegung entstehenden und danach modifizierten Bildern zusammengesetzt wird. Die Modifikation der Detailbilder erfolgt dabei sowohl in Abhängigkeit von dem jeweiligen Bildwert als auch in Abhängigkeit von dem mittleren Bildwert und/oder der Variation der Bildwerte in einem Fenster um das jeweilige Pixel herum.

FIG. 7

EP 0 996 090 A2

Printed by Xerox (UK) Business Services
2.16.7 (HRS)/3.6

**Beschreibung**

Die Erfindung betrifft ein Verfahren zur Verarbeitung eines Eingangsbildes mit folgenden Schritten:

- Zerlegung des Eingangsbildes in eine Folge von Detailbildern, die jeweils nur einen Teil der Ortsfrequenzen des Eingangsbildes enthalten.
- Modifikation mindestens eines Teils der zu den Pixeln wenigstens eines der Detailbilder gehörenden Bildwerte,
- Rekonstruktion eines Ausgangsbildes aus den ggf. gefilterten Detailbildern.

Das Eingangsbild kann dabei eine Röntgenaufnahme sein, doch können auch andere bei der medizinischen Diagnostik erzeugte und in elektronischer Form vorliegende Bilder verarbeitet werden, wobei jedem Pixel (als Pixel wird ein Bildelement bezeichnet; ein Bild setzt sich aus einer Matrix von Pixeln zusammen) ein die Helligkeit in diesem Pixel kennzeichnender Bildwert zugeordnet ist. Außerdem bezieht sich die Erfindung auf eine Anordnung zur Durchführung dieses Verfahrens.

Ein Verfahren der eingangs genannten Art ist aus der EP-A 527 525 bekannt. Bei dem bekannten Verfahren wird in einer ersten Zerlegungsebene das Eingangsbild einer Tiefpaßfilterung unterzogen, und das entstehende Tiefpaßbild wird von dem Eingangsbild subtrahiert, wobei sich ein als erstes Detailbild bezeichnetes Differenzbild ergibt, in dem nur noch die allerhöchsten Ortsfrequenzen des Eingangsbildes erhalten sind. Wegen der Subtraktion des Tiefpaßbildes von dem Eingangsbild können sich für Pixel in dem Detailbild sowohl positive als auch negative Werte ergeben. Diese stellen den Kontrast des Bildes dar; doch werden sie im folgenden gleichwohl als Bildwerte bezeichnet.

In einer zweiten Zerlegungsebene wird das Tiefpaßbild einer erneuten Tiefpaßfilterung unterzogen, so daß ein zweites Tiefpaßbild entsteht, das bezogen aufdas Orginalbild weniger höherfrequente Ortsfrequenzanteile repräsentiert, als das erste Tiefpaßbild. Das zweite Tiefpaßbild wird vom ersten subtrahiert, wobei ein zweites Detailbild entsteht, das überwiegend Ortsfrequenzen repräsentiert, die unterhalb des Ortsfrequenzbandes des ersten Detailbildes, aber oberhalb des Ortsfrequenzbereichs des zweiten Tiefpaßbildes liegen.

In einer dritten Zerlegungsebene wird auf analoge Weise aus dem zweiten Tiefpaßbild ein drittes Tiefpaßbild mit noch weniger höherfrequenten Ortsfrequenzanteilen und ein aus der Differenz des zweiten und dritten Tiefpaßbildes abgeleitetes drittes Detailbild erzeugt. Das von diesem dritten Detailbild repräsentierte Ortsfrequenzband liegt überwiegend unterhalb des Ortsfrequenzbereichs des zweiten Detailbildes, aber oberhalb des Ortsfrequenzbereichs des dritten Tiefpaßbildes. An diese dritte Zerlegungsebene schließen sich noch weitere Zerlegungsebenen an, wobei die entstehenden Derailbilder stets niedrigere Ortsfrequenzen repräsentieren, als das Detailbild der vorhergehenden Zerlegungsebene.

Die Detailbilder und das Restbild werden addiert, nachdem mindestens eines der Detailbilder modifiziert worden ist. Damit sollen die diagnostisch relevanten Bildinformationen hervorgehoben und die für die Diagnose unwichtigen oder störenden Bildinformationen unterdrückt werden.

In der EP-A 527 525 sind zwei Alternativen für die Modifikation der Detailbilder angegeben:

a) Bei einer ersten Alternative werden die Bildwerte eines Detailbildes Pixel für Pixel mit einem Faktor multipliziert, der von einem Bildwert eines Pixels mit entsprechenden Koordinaten in einem Tiefpaßbild abhängt, dessen Ortsfrequenzbereich unterhalb des Ortsfrequenzbandes des Detailbildes liegt. Bei niedrigen Bildwerten in diesem Tiefpaßbild (die bei einer Röntgenaufnahme den hellen Bildpartien entsprechen) ist der einem Tabellenspeicher (look up table) entnommene Faktor kleiner als 1 und bei großen Mittelwerten größer als 1. Dadurch werden die Kontraste in den hellen Bildbereichen, wo sich das Rauschen besonders störend bemerkbar macht, abgesenkt, während sie in den dunkleren Bildbereichen angehoben werden. Allerdings erfolgt die Absenkung bzw. die Anhebung unabhängig von den Bildwerten im Detailbild. Das Rauschen in diesen Bildpartien wird dadurch also in gleicher Weise abgesenkt, wie die in den größeren Bildwerten enthaltene Nutzinformation.

b) Bei der zweiten Alternative werden die Bildwerte wenigstens eines Detailbildes in Abhängigkeit von ihrer Größe modifiziert, entsprechend einer nicht linearen Kennlinie, wodurch die ganz niedrigen Bildwerte (entsprechend dem Rauschen) abgeschwächt, mäßig niedrige Bildwerte angehoben und höhere Bildwerte unverändert bleiben. Allerdings erfolgt diese Modifikation unabhängig davon, ob der Bildwert einem Pixel zugeordnet ist, das in den hellen oder in den dunklen Bildpartien liegt. Auch in den dunkleren Bildpartien, in denen sich Rauschen in geringerem Maße auswirkt als in den hellen Bildpartien, werden also niedrige Bildwerte des Detailbildes im Verhältnis zu höheren Bildwerten geschwächt. Dieses Verfahren hat die Nachteile, daß es zum einen nicht robust gegenüber Rauschpulsen ist, die nicht mehr im Bereich der ganz schwachen Kontraste sondern im Bereich mäßig schwacher Kontraste liegen und deshalb sogar verstärkt werden und zum anderen Nutzinformation im Bereich ganz schwacher Kontraste in jedem Fall geschwächt wird.

Aufgabe der vorliegenden Erfindung ist es, ein Verfahren der eingangs genannten Art so zu gestalten, daß die Bildqualität noch weiter verbessert werden kann. Diese Aufgabe wird erfindungsgemäß dadurch gelöst, daß die Modifikation eines Bildwertes der Multiplikation dieses Bildwertes mit einem Faktor entspricht, der sowohl von diesem Bildwen selbst als auch von dem mittleren Bildwert und/oder der Variation der Bildwerte in einem Fenster um das jeweilige Pixel in dem Eingangsbild oder einem daraus abgeleiteten Bild abhängt.

Die Erfindung basiert auf der Erkenntnis, daß sich eine optimale Bildqualität nur dann ergeben kann, wenn die Modifikation der Bildwerte sowohl von dem jeweiligen Bildwert selbst als auch von dem mittleren Bildwert und/oder der Variation der Bildwerte in einem Fenster um das jeweilige Pixel in dem Eingangsbild oder einem daraus abgeleiteten Bild abhängt. Dadurch ist es beispielsweise möglich, daß in einem Detailbild die niedrigen Bildwerte im Verhältnis zu den höheren Bildwerten dann verstärkt werden, wenn sie einem Pixel zugeordnet sind, das in einer dunklen Bildpartie liegt, und nicht verstärkt werden, wenn das betreffende Pixel in einer hellen Bildpartie liegt.

Die Erfindung beruht weiterhin auf der Erkenntnis, daß die Modifikation statt vom mittleren Bildwert (was gleichbedeutend ist mit der Dichte des Bildes) in einem Fenster um das betreffende Pixel herum auch von der Variation der Bildwerte in einem solchen Fenster abhängen kann - jedenfalls dann, wenn es darum geht das Rauschen bei der Kontrastanhebung nicht sichtbar mit anzuheben. In Bildbereichen, in denen die Bildwerte stark variieren, wird das Rauschen nämlich nicht so stark wahrgenommen, wie in den Bildbereichen, in denen nur eine schwache Variation der Bildwerte gegeben ist.

Eine Möglichkeit, die Erfindung zu implementieren bestünde darin, einen Tabellenspeicher vorzusehen, in dem für jeden Bildwert eines Pixels und für jede Dichte (mittlerer Bildwert) in einem Fenster um dieses Pixel ein Faktor gespeichert ist. Die Speicherung einer solchen zweifachen Abhängigkeit in einem Tabellenspeicher wäre aber aufwendig, und Änderungen dieser zweifachen Abhängigkeit wären nur mit außerordentlichem Aufwand zu implementieren.

Anspruch 2 beschreibt demgegenüber eine wesentlich einfachere Möglichkeit. Dabei werden zunächst die niedrigen Bildwerte in dem Detailbild (d.h. die schwachen Kontraste) angehoben. Jedoch wird das Ausmaß dieser Anhebung in Abhängigkeit von der Dichte (und/oder der Variation der Bildwerte) gesteuert. Diese Steuerung kann dann so definiert sein, daß in hellen Bildpartien keine Kontrastanhebung erfolgt, wohl aber in dunklen Bildpartien. Dadurch wird das Rauschen zwar nicht verringert; es wird durch die Kontrastanhebung jedoch auch nicht verstärkt.

Eine besonders einfache Art der Steuerung ist in Anspruch 3 angegeben. Es erfolgt eine gewichtete Summierung des Detailbildes vor und nach der Konvertierung, wobei die Gewichtung von der Dichte (dem mittleren Bildwert) und/oder der Variation der Bildwerte in dem Fenster um das Pixel im Orginalbild oder einem abgeleiteten Bild abhängt. Wenn das Detailbild vor der Konvertierung mit einem Gewichtungsfaktor 1 und das Detailbild nach der Konvertierung mit einem Gewichtungsfaktor 0 gewichtet wird, enthält das Summenbild keine Kontrastanhebung. Wird hingegen das Detailbild vor der Konvertierung mit einem Gewichtungsfaktor 0 und das Detailbild nach der Konvertierung mit einem Gewichtungsfaktor 1 beaufschlagt, dann ergibt sich die volle Kontrastanhebung. Äquivalent dazu ist es, (Pixel für Pixel) die Bildwerte des Detailbildes vor und nach der Konvertierung voneinander zu subtrahieren und die Differenz gewichtet zu dem nicht konvertierten Detailbild zu addieren.

Anspruch 4 beschreibt eine für die Unterdrückung des Rauschens geeignete Weiterbildung, die davon ausgeht, daß der wesentliche Anteil des Rauschens sich auf das erste Detailbild mit den höchsten Ortsfrequenzen und ggf. noch auf das zweite Detailbild konzentriert. Wenn mit abnehmender Dichte und ahnehmender Variation der Bildwerte die Schwachkontrastanhebung reduziert wird, wird das Rauschen in den dafür empfindlichen Bildbereichen (helle Bildbereiche bzw. Bildbereiche mit niedriger Variation der Bildwerte bzw. hohe Ortsfrequenzen) nicht angehoben.

Hierbei hängt das Ausmaß der Bildverbesserung also von der Wahrscheinlichkeit ab, das Bildsignal und nicht das Rauschen zu verstärken, bzw. von der Wahrscheinlichkeit, daß eventuell mirverstärktes Rauschen maskiert wird. Der Vorteil dieser Art der rauschrobusten Bildverbesserung ist, daß keine Abschwächung von Originalbildinhalten auftritt.

Anspruch 5 beschreibt eine Vorrichtung zur Durchführung des erfindungsgemäßen Verfahrens. Die weitere Ausgestaltung nach Anspruch 6 bezieht sich auf ein Röntgensystem mit einer Speicheranordnung (Datenbank) in der für eine Anzahl von Organen je ein Satz von Aufnahmeparametern gespeichert ist. Röntgensysteme mit solchen Datenbanken sind unter dem Begriff "APR" (**A**natomically **P**rogrammed **R**adiography) an sich seit langem bekannt. Dabei wird von der Erkenntnis ausgegangen, daß es keine Einstellung der Aufnahmeparameter gibt, die für die Aufnahmen sämtlicher Organe optimal ist. Da bei einer Röntgenaufnahme dieser Art die Aufnahmeparameter ohnehin organabhängig bzw. in Abhängigkeit von der darzustellenden anatomischen Region des Patienten aufgenommen werden, sieht diese Weiterbildung vor, daß außer den erforderlichen Aufnahmeparametern auch die für die Röntgenaufnahme der betreffenden anatomischen Region optimalen Bildverarbeitungsparameter gespeichert werden.

Die Erfindung wird nachstehend anhand der Zeichnungen näher erläutert. Es zeigen:

Fig. 1     ein Röntgenaufnahmegerät mit einer erfindungsgemäßen Bildverarbeitungsvorrichtung,

Fig. 2     ein Blockdiagramm zur Erläuterung der Bildverarbeitung,

Fig. 3     ein Blockdiagramm der darin enthaltenen Modifikationsstufe,

Fig. 4     eine Kennlinie zur Anhebung der schwachen Kontraste,

Fig. 5 a 5b     verschiedene Kennlinien zur Steuerung der Schwachkontrastanhebung,

Fig. 6     ein Dichte/Ortsfrequenzdiagramm und

Fig. 7     eine weitere Ausgestaltung der Modifikationsstufe.

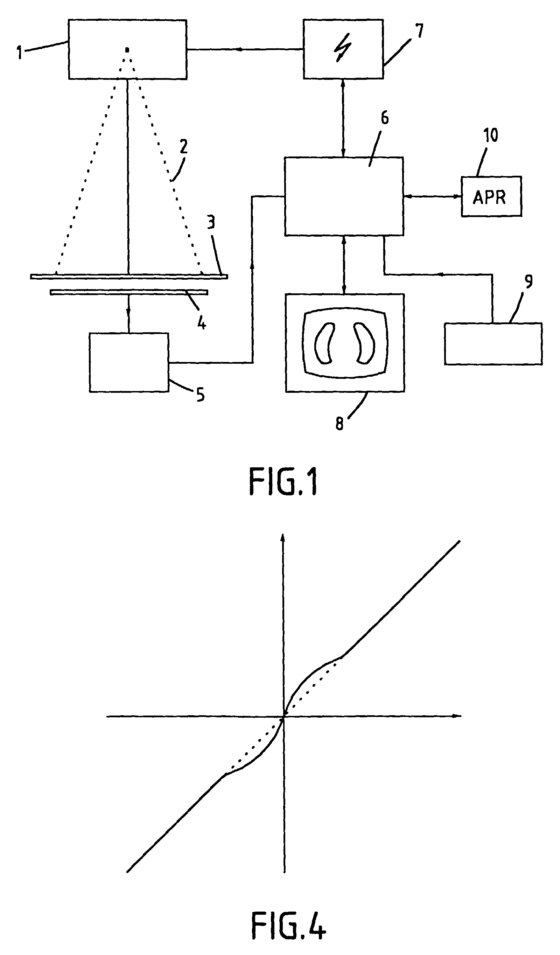

In Fig. 1 ist mit 1 ein Röntgenstrahler bezeichnet, der ein Strahlenbündel 2 emittiert, das einen nicht näher dargestellten, auf einem durch eine Tischplatte 3 angedeuteten Parientenlagerungstisch gelagerten Patienten durchstrahlt und auf einen Bildaufnehmer 4 trifft, der die auftreffende Röntgenstrahlungsintensität onsabhängig in elektrische Signale umsetzt.

Der Bildaufnehmer 4 kann beispielsweise aus einer Vielzahl von matrixförmig angeordneten, für Röntgenstrahlung empfindlichen Detekrorelementen bestehen, die elektrische Signale erzeugen, deren Amplitude der Intensität der auf sie auftreffenden Röntgenstrahlung entsprechen. Der Bildaufnehmer kann aber auch einen Photoleiter enthalten, auf dem ein von der Röntgenstrahlung abhängiges Ladungsmuster erzeugt wird, das elektrosratisch abgetastet wird. Schließlich kann als Bildaufnehmer auch ein Speicherphosphor vorgesehen sein, in dem durch die Röntgenstrahlung ein latentes Bild erzeugt wird, das mittels eines Lasers ausgelesen und digiralisiert werden kann. Die konkrete physikalische Ausgestaltung des Bildaufnehmers ist für die Erfindung nicht wesentlich; wichtig ist nur, daß das Röntgenstrahlenbild in eine Folge von digitalen Datenworten umgesetzt werden kann, die die Bildwerte an den einzelnen Pixeln eines Eingangsbildes repräsentieren.

Der Bildaufnehmer 4 wird von einem daran angepaßten Lesegerät 5 ausgelesen, das eine Folge von Digitalwerten erzeugt, die jeweils einem Bildwert des Eingangsbildes entsprechen. Das Lesegerät 5 kann dabei bereits so ausgestaltet sein, daß es die durch den Bildaufnehmer bedingten Artefakte beseitigt und beispielsweise schon eine Kontrast-Harmonisierung vornimmt, durch die der Dynamikumfang der groben Strukturen in diesem Bild reduziert wird.

Die von der Leseeinheit 5 erzeugten Digitalwerte werden einer Workstation 6 zugeführt, in der einerseits eine Bildverarbeitung erfolgt andererseits aber auch eine Steuerung eines Röntgengenerator 7, an den der Röntgenstrahler 1 angeschlossen ist. Die Workstation 6 arbeitet mit einem Monitor 8 zusammen, auf dem ein Röntgenbild wiedergegeben werden kann, das aber auch den Systemzustand wiedergeben kann, z.B. die im Röntgenstrahler wirksame Röhrenspannung, die Aufnahmedauer oder die Körperregion, die bei der nächsten Röntgenaufnahme abgebildet werden soll. Außerdem ist eine Eingabeeinheit 9 vorgesehen mit der der Benutzer Steuerbefehle eingeben kann. Schließlich wirkt die Workstation 6 mit einer in einem Speicher 10 enthaltenen APR-Datenbank zusammen, die einerseits die Aufnahmeparameter und andererseits Steuerparameter für eine nachfolgende Bildverarbeitung jeweils für verschiedene Organe bzw. verschiedene anatomische Regionen enthalten kann.

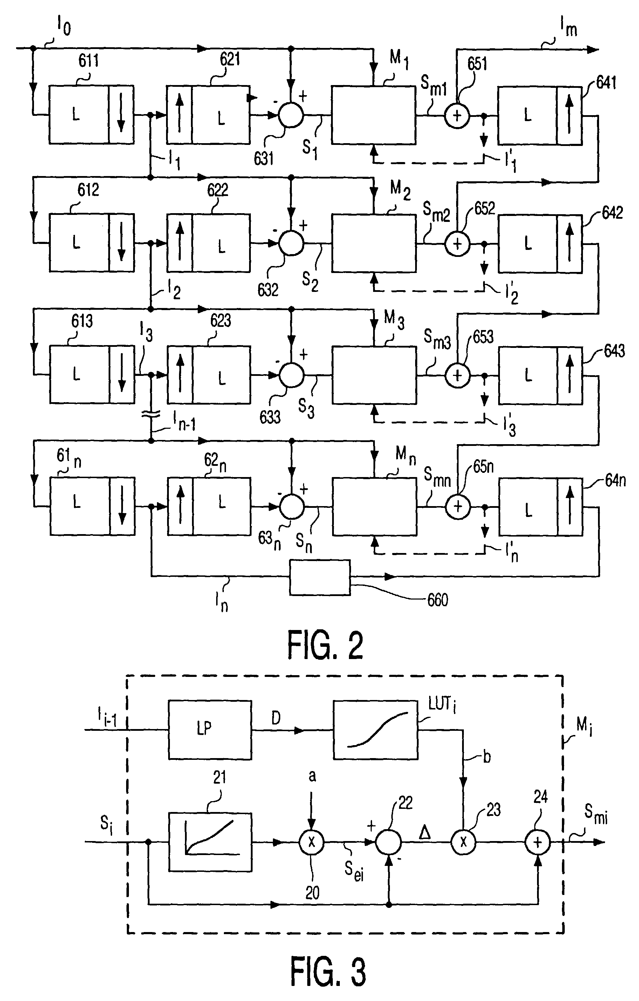

Nachfolgend wird die in der Workstation 6 durchgeführte Verarbeitung eines Eingangsbildes $I_0$ anhand des Blockdiagramms gemäß Fig. 2 näher erläutert. Das Eingangsbild $I_0$ wird zunächst im Block 611 einer Tiefpaßfilterung unterzogen, wobei die oberste Ortsfrequenz die nach der Tiefpaßfilterung übrig bleibt halb so groß ist wie die maximale Ortsfrequenz, die in dem Eingangsbild $I_0$ enthalten sein kann. Gleichzeitig erfolgt, wie durch den abwärtsweisenden Pfeil angedeutet, eine Unterabrastung, indem das Tiefpaßbild in Zeilen- und in Spaltenrichtung nur für jeden zweiten Bildpunkt berechnet wird. Das auf diese Weise erzeugte Tiefpaßbild $I_1$ wird u.a. einer Stufe 621 zugeführt, in der einerseits die Zahl der Bildpunkte vergrößert wird, in dem beispielsweise zwischen je zwei Zeilen bzw. Spalten des Tiefpaßbildes $I_1$ eine Zeile bzw. eine Spalte von Nullen eingefügt wird und das entstehende Bild mit einem Tiefpaßkernel gefaltet wird. Das Bild am Ausgang der Stufe 621 entspricht daher im wesentlichen dem Bild, das sich ergeben würde, wenn in der Stufe 611 nach der Tiefpaßfilterung nicht jede zweite Zeile und Spalte eliminiert worden wäre. Jedoch hat dieses Tiefpaßbild genauso viele Pixel wie das Eingangsbild $I_0$, aus dem es abgeleitet ist. Im Block 631 wird dieses Tiefpaßbild - Pixel für Pixel - von dem Eingangsbild $I_0$ subtrahiert. Das sich dabei ergebende Subtraktionsbild stellt das erste Detailbild $S_1$ dar, das lediglich die höheren Ortsfrequenzen des Bildes $I_0$ enthält, aus dem es abgeleitet wurde.

In einer zweiten Zerlegungsebene wird das Tiefpaßbild $I_1$, welches die untere Hälfte des Frequenzspektrums des Orginalbildes repräsentiert, in der gleichen Weise verarbeitet, wie in der vorangehenden Zerlegungsebene das Eingangsbild $I_0$. Das Bild wird also in einer Stufe 612 einer Tiefpaßfilterung unterzogen, und gleichzeitig wird die Zahl der Pixel in Zeilen- und in Spaltenrichtung wiederum halbiert, so daß sich ein Tiefpaßbild $I_2$ mit erneut um einen Faktor 2 reduzierter Zeilen- und Spaltenzahl ergibt, welches bezogen auf das Orginalbild nur noch das untere Viertel des Frequenzspektrums enthält. Das Tiefpaßbild $I_2$ wird in einer Stufe 622 wiederum so interpoliert, daß sich ein Tiefpaßbild mit der gleichen Zahl von Pixeln wie das Tiefpaßbild $I_1$ ergibt. Dieses hinter dem Block 622 erzeugte Tiefpaßbild wird in dem Block 632 von dem Bild $I_1$ subtrahiert, aus dem es abgeleitet wurde, so daß sich ein zweites Detailbild $S_2$ ergibt. Dieses Detailbild

repräsentiert bezogen auf das Orginalbild die obere Hälfte des Ortsfrequenzbandes, das sich an das im Detailbild $S_1$ enthaltene Ortsfrequenzband anschließt, umfaßt aber nicht den im Tiefpaßbild $I_2$ enthaltenen Ortsfrequenzbereich.

In einer dritten Zerlegungsstufe wird das Tiefpaßbild $I_2$ in derselben Weise verarbeitet, wie in der zweiten Zerlegungebene das Tiefraßbild $I_1$. Es resultieren daraus ein Tiefpaßbild $I_3$ (mit der halben Zeilen- und Spaltenzahl wie das Tiefpaßbild $I_2$), welches das untere Achtel des Orginalspektrums repräsentiert, sowie ein Detailbild $S_3$, dessen Ortfrequenzband sich an das Ortsfrequenzband des Detailbildes $S_2$ anschließt. Der Zerlegungsprozeß kann n solcher identisch aufgebauter Zerlegungsebenen enthalten. Typische Werte für n sind 7 oder 8. Das bedeutet, daß das Tiefpaßbild $I_n$ (das auch als Restbild bezeichnet werden kann) 128 oder 256 Zeilen bzw. Spalten im Eingangsbild durch eine einzige Zeile bzw. Spalte ersetzt.

Bekanntlich könnte man das Eingangsbild $I_0$ vollständig aus dem Restbild $I_n$ und den Detailbildern $S_1...S_n$ rekonstruieren, wenn man die Bilder zueinander addiert, nachdem man durch Interpolation dafür gesorgt hat, daß die zu addierenden Bilder gleiche Zeilen- und Spaltenzaht aufweisen. Diesem Zweck dienen die in den Zerlegungsebenen enthaltenen Interpolationsstufen 641.....64n und die ihnen in den einzelnen Ebenen nachgeschalteten Additionsstufen 651, 652, 653 und 65n. Dieser Rekonstruktionsprozeß ist in dem eingangs erwähnten Dokument im einzelnen beschrieben, worauf zur Vermeidung von Wiederholungen Bezug genommen wird.

Da aber mindestens eines der Detailbilder $S_1....S_n$ durch eine Modifikationsstufe $M_1, M_2, M_3....M_n$ modifiziert wird, so daß modifizierte Detailbilder $S_{m1}, S_{m2}, S_{m3}....S_n$ entstehen, weicht das durch die Rekonstruktion entstehende Ausgangsbild $I_m$ von dem Eingangsbild $I_0$ ab. In Fig. 3 ist eine Modifikationsstufe $M_i$ (i= 1,2,3.....n) dargestellt.

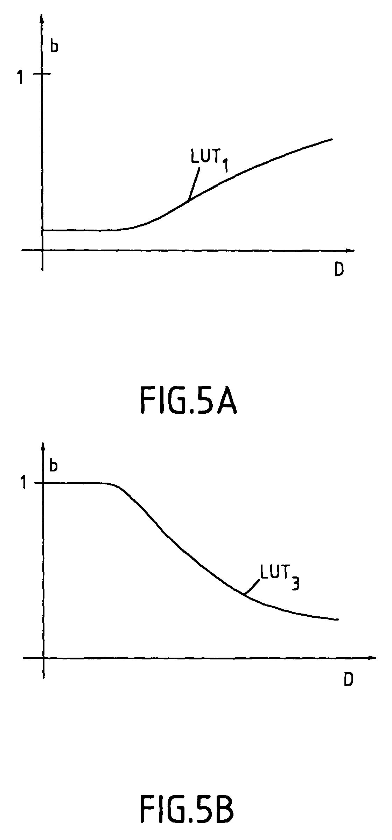

Der Bildwert eines jeden Pixels im Detailbild $S_i$ wird in einer Stufe 21 mit nichtlinearer Übertragungskennlinie transformiert. Dies erfolgt am einfachsten mittels eines Tabellenspeichers (look up table), der jedem Bildwert $S_i$ an seinem Eingang einen ggf. geänderten Bildwert $S_{ei}$ an seinem Ausgang zuordnet. Fig. 4 stellt den typischen Verlauf der nichtlinearen Kennlinie (mit dem Bildwert $S_i$ als Abszisse und dem Bildwert $S_{ei}$ als Ordinate) gemäß Block 21 dar, doch können die Breite des angehobenen Bereiches und das Ausmaß der Anhebung bei den verschiedenen Modifikationsstufen unterschiedlich groß sein. Man erkennt, daß große Bildwerte unverändert bleiben, während kleinere Bildwerte (die im ersten Detailbild dem Rauschen entsprechen können) relativ zu den größeren Bildwerten angehoben werden. Da die Bildwerte der Detailbilder den Kontrast des Eingangsbildes in dem jeweiligen Ortsfrequenzbereich darstellen, bewirkt die angegebene Übertragungskennlinie eine Anhebung der schwachen Kontraste in dem jeweiligen Bild.

Anschließend wird der Bildwert eines jeden Pixels im Detailbild $S_i$ in einer Multiplikationsstufe 20 mit einem Faktor multipliziert, der größer ist als 1. Das bedeutet, daß dieses Detailbild $S_i$ im Verhältnis zu dem Restbild $I_n$ (wenn die Modifikationsstufen $M_{i+1}.....M_n$ diese Multiplikation nicht enthalten aber auch im Verhältnis zu den Detailbildern der nachfolgenden Zerlegungsstufen $S_{i+1}...S_n$) angehoben werden. Diese Multiplikation und die damit einhergehende Betonung der höheren Ortsfrequenzen kann aber ggf. auch entfallen oder bereits in der Leseeinheit 5 vorgenommen werden.

Danach wird in der Stufe 22 die Differenz $\Delta$ zwischen dem Bildwert am Ausgang der Stufe 21 und dem im gleichen Pixel in dem Detailbild $S_i$ zugeordneten Bildwert gebildet. Diese Differenz $\Delta$ wird in einer Multiplizierstufe 23 mit einem Faktor b multipliziert, der zwischen 0 und 1 liegt. Der multiplizierte Differenzwert $b\Delta$ wird zu dem Bildwert $S_i$ addiert (Block 24) und bildet damit einen Bildwert des modifizierten Detailbildes $S_{mi}$. Wenn der Faktor b=0 ist, entspricht der Bildwert nach der Addition im Block 24 genau dem Wert im Detailbild $S_i$. Die Kontrastanhebung im Block 21 kommt dabei nicht zur Wirkung. Wenn b hingegen den Wert 1 hat, ist die Kontrastanhebung voll wirksam.

Der Faktor b wird aus einem Bild abgeleitet, das zu jedem Pixel im Detailbild $S_i$ einen der mittleren Helligkeit an dieser Stelle entsprechenden Wert enthält. Zum Beispiel kann hierfür das Eingangsbild $I_{i+1}$ verwendet werden, aus dem das Detailbild $S_i$ abgeleitet ist, weil dieses Bild genau soviele Pixel enthält wie das Detailbild. Dieses Bild wird einer Tiefpaßfilterung unterzogen, wobei der mittlere Bildwert - d.h. die Dichte D - in einem Fenster von z.B. 5 x 5 Pixeln herangezogen wird, in dessen Mitte sich das gleiche Pixel befindet, dessen Bildwert jeweils der Schwachkontrastanhebung im Block 21 unterzogen wird. Alternativ kann aber auch - wie gestrichelt angedeutet - Bild $I_i'$ aus dem Rekonstruktionspfad (d.h. vom Ausgang der Interpolationsstufe $64_i$ ..i=1,2,3) zur Steuerung verwendet werden, wobei die Tiefpaßfilterung in Block 25 entfallen kann. Dies ist insbesondere dann zweckmäßig, wenn das Restbild $I_n$ durch eine zusätzliche Dichtekorrektur-Stufe 660 einer Dichtekorrektur (z.B. entsprechend einer Filmkurve) unterzogen wird. Der der Dichte D ensprechende gefilterte Bildwert wird einem Tabellenspeicher $LUT_i$ zugeführt der jedem Wert D einen Wert b zuordnet.

Wie stark die Kontrastanhebung wirksam wird, hängt somit von der Dichte in einem Fenster um das jeweilige Pixel ab sowie von dem Verlauf der in dem Tabellenspeicher $LUT_i$ gespeicherten Kennlinie. Im folgenden wird beschrieben, wie man die Rauschverstärkung beschränken, aber auch darüberhinaus die Kontrastanhebung organspezifisch steuern kann. Letzteres funktioniert unter der Voraussetzung, daß eine Unterscheidung zwischen Organen mit Hilfe der Kriterien Dichte und Detailgröße möglich ist. Eine solche organspezifische Steuerung der Kontrastanhebung ist insbesondere bei Lungenaufnahmen möglich und wünschenswert.

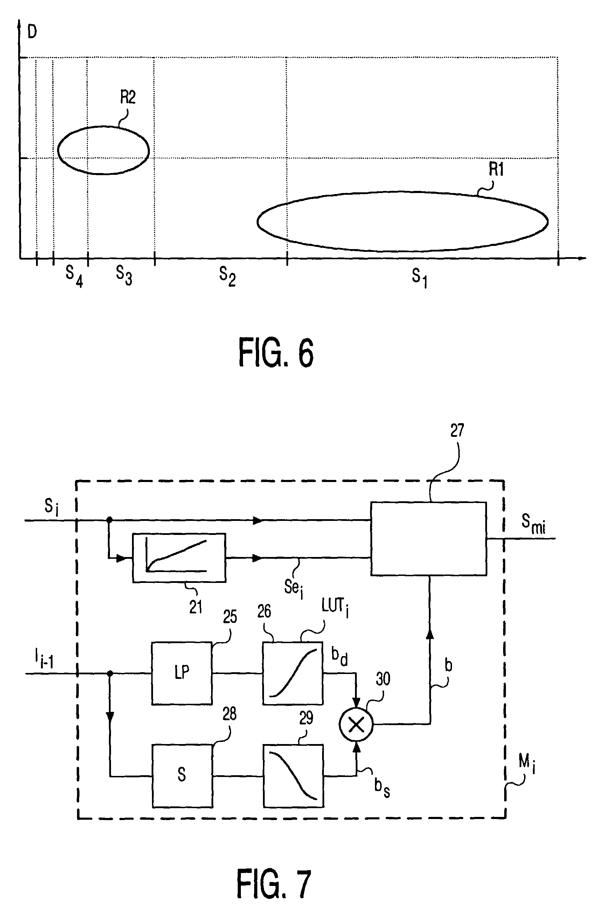

Zur näheren Erläuterung wird zunächst auf Fig. 6 verwiesen, die ein Diagramm darstellt mit der Dichte D als Ordinate und den Ortsfrequenzbändern der einzelnen Detailbilder als Abszissen. In diesem Diagramm ist eine Region $R_1$ dargestellt, die sich in den Detailbildern $S_1$, $S_2$ mit den höchsten Ortsfrequenzen bei der niedrigsten Dichte befindet. Der zugehörige Dichtebereich entspricht in einem Röntgenbild einer niedrigen Strahlendosis. Wegen des nichtlinearen, im allgemeinen logarithmischen Zusammenhanges zwischen der Strahlendosis und der Dichte, wird bekanntlich in diesem Bereich das Rauschen am stärksten sichtbar.

Außerdem ist in Fig. 6 ein zweiter Bereich $R_2$ eingezeichnet, der einer mittleren Dichte bzw. einer mittleren Helligkeit entspricht und der in einem niedrigeren Ortsfrequenzbereich liegt, z.B. in den Detailbildern $S_3$ und $S_4$. In dieser Region werden bei einer Lungenaufnahme mit heute üblichen Auflösungen von 0,2mm/ ein Großteil der Lungengefäße abgebildet. Werden in diesem Bereich die Schwachkontraste angehoben, dann kann sich auch bei gesunden Lungen ein pathologischer Bildeindruck ergeben. Hingegen sollen im gleichen Ortsfrequenzbereich die Strukturen im unteren Dichtebereich in ihrem Kontrast angehoben werden. In diesem Bereich liegen z.B. Strukturen, die von Mediastinum und Herzschatten überlagert werden und daher schlecht sichtbar sind. Gleichzeitig spielt in diesem Ortsfrequenzbereich das Rauschen keine so große Rolle.

In Fig. 5a und 5b sind die dafür erforderlichen Kennlinien dargestellt, die in den Tabellenspeichern $LUT_i$ der Modifikationsstufen gespeichert sind.

Fig. 5a stellt die Steuerkennlinie für das höchste Ortsfrequenzband $S_1$ (und ggf. $S_2$) dar. Bei niedriger Dichte ergibt sich dabei ein niedriger Wert des Faktors b, d.h. die durch die Kennlinie gemäß Fig. 4 bewirkte Kontrastanhebung wird am Ausgang der Stufe 24 kaum wirksam. Die in dem Bereich von $R_1$ liegenden Schwachkontraste - insbesondere das Rauschen -werden also nicht angehoben werden. Das Rauschen wird nicht reduziert, praktisch jedoch auch nicht verstärkt, wie es der Fall wäre, wenn alle Schwachkontraste angehoben würden. Zu größeren Dichtewerten hin kann der Faktor b zunehmen und damit das Ausmaß in dem die Kontrastanhebung wirksam wird. In diesem Dichtebereich ist das Rauschen im allgemeinen nicht so störend wie im unteren Dichtebereich.

Fig. 5 b zeigt demgegenüber eine Kennlinie, wie sie in dem Tabellenspeicher $LUT_3$ für die Modifikation im Block $M_3$ enthalten sein kann. Bei niedrigen Werten der Dichte ist der Faktor b groß. Dadurch wird die Schwachkontrasranhebung bei niedriger Dichte im Röntgenbild (also im Bereich des Mediastinums, des Herzschattens und des Abdomens) voll wirksam. Zu höheren Werten der Dichte hin nimmt der Faktor b gemäß Fig. 5b kontinuierlich ab, so daß in dem Dichrebereich, in dem die Lungengefäße überwiegend abgebildet werden, die Schwachkontrastanhebung in weit geringerem Maße wirksam wird.

Die Kennlinie gemäß Fig. 5b ist somit für Lungenaufnahmen gut geeignet. Für andere Aufnahmen hingegen kann ein völlig anderer Kennlinienverlauf erforderlich sein. Die für verschiedene Organe optimalen Kurven bzw. Bildverarbeitungsparameter sollten daher - zumindest für einige ihrer Stützpunkte - in der APR Datenbank 10 gespeichert sein und bei einer Vorgabe des darzustellenden Organs durch den Untersucher aufgerufen bei der nachfolgenden Bildverabeitung vorgegeben werden.

Fig. 7 zeigt eine andere Ausführungsform der Modifikationsstufe $M_i$. Das Detailbild $S_i$ wird dabei wiederum im Block 21 einer Schwachkontrastanhebung unterzogen. Das resultierende Detailbild mit verstärktem Kontrast $S_{ei}$ wird in einer Kombinationsstufe 27 mit dem Detailbild $S_i$ Bildpunkt für Bildpunkt kombiniert. Für das modifizierte Ausgangsbild gilt dann die Gleichung

$$S_{mi} = b \cdot S_{ei} + (1-b) \cdot S_i \qquad (1)$$

Diese gewichte Summierung von $S_e$ und $S_{ei}$ ist äquivalent zu der aus Fig. 3 ersichtlichen Kombination, wobei zunächst die Differenz $\Delta$ zwischen dem im Kontrast verstärkten Detailbild $S_{ei}$ und dem Detailbild $S_i$ selbst gebildet wird und die Differenz $\Delta$ dann mit dem Gewicht b zu dem Detailbild $S_i$ addiert wird.

Der Wert b ergibt sich dabei als Produkt der Faktoren $b_d$ und $b_s$, wobei $b_d$ auf die gleiche Weise ermittelt wird wie der Faktor b gemäß Fig. 3. Der Faktor $b_s$ hängt von der Variation der Bildwerte in einem Fenster um das Pixel ab, das gerade gemäß Gleichung 1 bearbeitet wird. Bei einer schwachen Variation der Bildwerte ist der Faktor $b_s$ klein, und bei einer starken Variation ist der Faktor $b_s$ groß. Damit wird der Tatsache Rechnung getragen, daß das Rauschen bei einem Pixel, in dessen Umgebung sich die Bildwerte stark ändern, weniger störend ist als bei einer Pixel, in dessen Umgebung die Bildwerte nur geringfügig schwanken. Die Variation der Bildwerte kann dabei auf unterschiedlichste Weise bestimmt werden. Beispielhaft seien hier drei verschiedene Variationsmaße angegeben.

Als erstes Beispiel sei hier die Standardabweichung

$$T = \sqrt{\frac{1}{F} \sum_C \left( \langle BW(S_i) \rangle - BW(S_i) \right)^2} \qquad (2)$$

angegeben. Hierbei bezeichne $BW(S_i)$ einen Bildwert von $S_i$ und $\langle BW(S_i) \rangle$ den Mittelwert der Bildwerte in einem lokalen Fenster um einen betrachteten Pixel. C steht für alle Pixel, die sich in einem lokalen Fenster der Größe F um das jeweilige Pixel befinden. Neben der Standardabweichung sind natürlich auch alle anderen Indikatoren der statistischen Schwankungsbreite, z.B. die höheren Momente, geeignete Maße für die Variation der Bildwerte. Gleichermaßen geeignet sind auch histogram-basierte Maße die nach folgender Beziehung bestimmt werden

$$T = -\sum_{g_u}^{g_o} f(p_g) \qquad (3)$$

Dabei ist $P_g$ der Bruchteil der Pixel mit dem Bildwert g, und $g_u$ und $g_o$ stellen den minimalen bzw. maximalen Grauwert dar. $f(p_g)$ ist eine strikt konvexe Funktion, für die z.B. die Beziehung gelten kann

$$f(p_g) = p_g \cdot \log p_g \qquad (4)$$

oder die Beziehung

$$f(p_g) = P_g^2 \qquad (5)$$

Bei den beispielhaft genannten Variationsmaßen T (Gleichungen 2 und 3) führt eine geringe Variation der Bildwerte zu einem kleinem Wert für T und eine großen Variation zu einem großen Wert.

Nach der Ermittlung des Wertes T für das jeweilige Pixel gemäß den Gleichungen 2 bzw. 3 und 4 oder 5 im Block 28 wird dem jeweils ermittelten Wert T mit einem Tabellenspeicher 29 ein Wen $b_s$ zugeordnet der groß ist für große T und klein für kleine Werte von T. Die Werte für $b_d$ und $b_s$ werden dann im Block 30 miteinander multipliziert, woraus sich der Faktor b für das jeweilige Pixel ergibt. Der wesentliche Unterschied gegenüber Fig. 3 besteht darin, daß auch der Wert $b_s$ in den Faktor b eingeht.

Es ist aber auch möglich, den Faktor b ausschließlich von der Variation der Bildwerte in einem Fenster um das jeweilige Pixel herum abhängig zu machen. Die Blöcke 25 und 26 könnten dann entfallen. Die Unempfindlichkeit gegenüber Rauschen wäre dann auch bei anderen medizinischen Bildern (z.B. Magnetresonanz-Bildern) gegeben, unabhängig davon, ob dabei das Rauschen in hellen Bildpartien stärker sichtbar ist als in dunklen.

**Patentansprüche**

1. Verfahren zur Verarbeitung eines Eingangsbildes mit folgenden Schritten:

   - Zerlegung des Eingangsbitdes in eine Folge von Detailbildern, die jeweils nur einen Teil der Ortsfrequenzen des Eingangsbildes enthalten,
   - Modifikation mindestens eines Teils der zu den Pixeln wenigstens eines der Detailbilder gehörenden Bildwerte,
   - Rekonstruktion eines Ausgangsbildes aus den ggf. gefilterten Derailbildern,

   dadurch gekennzeichnet, daß die Modifikation eines Bildwertes der Multiplikation dieses Bildwertes mit einem Faktor entspricht, der sowohl von diesem Bildwert selbst als auch von dem mittleren Bildwert und/oder der Variation der Bildwerte in einem Fenster um das jeweilige Pixel in dem Eingangsbild oder einem daraus abgeleiteten Bild abhängt.

2. Verfahren nach Anspruch 1 dadurch gekennzeichnet, daß die Modifikation folgende Schritte umfaßt:

   - Konvertierung der Bildwerte in wenigstens einem der Detailbilder mit einer nichtlinearen Kennlinie derart, daß die niedrigen Bildwerte in dem Detailbild im Vergleich zu den größeren angehoben werden,
   - Steuerung des Ausmaßes der Anhebung der niedrigen Bildwerte in den Pixeln des Detailbildes in Abhängigkeit von dem mittleren Bildwert und/oder der Variation der Bildwerte in einem Fenster um die jeweiligen Pixel in dem Eingangsbild oder einem daraus abgeleiteten Bild.

3. Verfahren nach Anspruch 2, dadurch gekennzeichnet, daß die Steuerung des Ausmaßes der Anhebung des Bildwertes eines jeden Pixels die gewichtete Summierung der Bildwertes in dem Detailbild und in dem konvertierten Detailbild mit einem Anteilsfaktor umfaßt, der von dem mittleren Bildwert und/oder der Variation der Bildwerte in einem Fenster um das jeweilige Pixel in dem Eingangsbild oder einem daraus abgeleiteten Bild abhängt.

4. Verfahren nach Anspruch 3, insbesondere für eine Röntgenaufnahme als Eingangsbild, dadurch gekennzeichnet, daß zumindest für die Detailbilder mit den höchsten Ortsfrequenzen die Anteilsfaktoren solche Werte haben, daß das Ausmaß der Anhebung Anhebungen mit abnehmender Dichte und/oder abnehmender Variation reduziert wird.

5. Vorrichtung zur Durchführung des Verfahrens nach Anspruch 1 mit einem Bildgebungssystem (1, 4, 5) und einer Bildverabeitungseinheit (10), die versehen ist mit

   - Mitteln (611, 621, 631......61n, 62n, 63n) zur Zerlegung des Eingangsbildes ($I_0$) in eine Folge von Detailbildern ($S_1$, $S_2$..... $S_n$), die jeweils nur einen Teil der Ortsfrequenzen des Eingangsbildes ($I_0$) enthalten,

- Mitteln zur Modifikation ($M_1$, $M_2$..... $M_n$) mindestens eines Teils der zu den Pixeln wenigstens eines der Detailbilder gehörenden Bildwerte,
- Mitteln (641, 651......64n, 65n) zur Rekonstruktion eines Ausgangsbildes ($I_m$) aus den ggf. modifiziertenen Detailbildern ($S_{m1}$, $S_{m2}$..... $S_{mn}$)

   <u>dadurch gekennzeichnet</u>, daß die Mitteln zur Modifikation ($M_1$, $M_2$..... $M_n$) so ausgebildet sind, daß die Modifikation eines Bildwertes der Multiplikation dieses Bildwertes mit einem Faktor entspricht, der sowohl von diesem Bildwert selbst als auch von dem mittleren Bildwert und/oder der Variation der Bildwerte in einem Fenster um das jeweilige Pixel in dem Eingangsbild oder einem daraus abgeleiteten Bild abhängt.

6. Vorrichtung nach Anspruch 5,

   <u>dadurch gekennzeichnet</u>, daß die Vorrichtung als Bildgebungssystem einen Röntgenstrahler (1) und einen Röntgen-Bildaufnehmer (4) zwecks Darstellung unterschiedlicher Organe durch Röntgenaufnahmen enthält, daß der Röntgenstrahler von einem Röntgengeneraror (7) gesteuert wird und daß eine Speicheranordnung (10) vorgesehen ist, in der für eine Anzahl von Organen je ein Satz von Aufnahmeparametern gespeichert ist, daß jeder Satz neben Aufnahmeparametern für den Röntgengenerator Parameter für die Modifikation der Detailbilder in Abhängikeit von dem mittleren Bildwert und/oder der Variation der Bildwerte in einem Fenster um das jeweilige Pixel in der Eingangsbild oder einem daraus abgeleiteten Bild enthält, und daß bei einer Vorgabe eines Organs die für dieses Organ gespeicherte die Modifikation der Detailbilder aufgerufen und der Bildverabeitungseinheit vorgegeben wird.

FIG.1

FIG.4

FIG. 2

FIG. 3

FIG.5A

FIG.5B

FIG. 6

FIG. 7